# EUROPEAN PATENT SPECIFICATION

(11) **EP 0 438 190 B1**
(45) Date of publication and mention of the grant of the patent: **20.04.1994**
(21) Application number: 91200027.0
(22) Date of filing: 08.01.1991
(51) Int. Cl.: B60V 1/16

(54) **Hovercraft**
Luftkissenfahrzeug
Véhicule à coussin d'air

(30) Priority: 08.01.1990 NL 9000043
(43) Date of publication of application: 24.07.1991
(73) Proprietor: B.V. KONINKLIJKE MAATSCHAPPIJ "DE SCHELDE", NL-4381 SE Vlissingen (NL)
(72) Inventor: Ludolphij, Johannes Wilhelmus Lubbertus, NL-4384 HL Vlissingen (NL)
(74) Representative: de Bruijn, Leendert C.

(56) References cited:
- AU-B- 457 242
- GB-A- 952 771
- GB-A- 1 308 195
- NL-A- 6 901 784
- US-A- 3 260 323
- US-A- 4 133 282

## Description

The invention relates to a hovercraft which at the bottom side is provided with an air cushion space to be placed under pressure, which space at the front side is defined by a skirt made of flexible material such as rubber or canvas, which skirt is designed in the form of one or more trough-shaped segments, each trough-shaped segment having a lower part of the front wall sloping from the front backwards.

Such a hovercraft is described in GB-A-1 308 195. When pressurized, the sidewalls of the adjacent trough-shaped segments press against each other, providing a leak proof seal. It is assumed that because the lower part of each trough-shaped segment slopes from the front backwards, the tips or lower region of the segments of the skirt are prevented from deflecting sideways, blocking a leakage path for the gas providing the gas cushion. It can be learned from the above mentioned patent, that the slope of the lower region of the through-shaped segments varies in the region from 0° to 13° maximum with the horizontal.

It has been found that craft in which the skirt at the front side of the air cushion space is made as described above have the tendency to dip forward during travel. This phenomenon is known in the technical field as the "plough-in effect". A hovercraft dipping forward in poor conditions (high speed, high waves) could disappear under the water surface. Besides, a slightly forward dipping hovercraft will encounter more friction resistance and travel less fast. The cause of this adverse phenomenon lies in the fact that, due to the escape of air through the above-mentioned skirt despite of the sloping lower part of the trough-shaped segments, the air pressure at the front side of the air cushion space is lower than that at the back.

The object of the invention is to avoid the above-described "plough-in effect" in a simple manner, and to provide a hovercraft of the type described in the preamble which is subject to less friction resistance during travel, and also shows less of a tendency to dip forward.

According to the invention, for that purpose the hovercraft is characterized in that at least the lower part of the front wall of the trough-shaped segments slopes from the front backwards at an angle α within a region from 20° - 35° with the horizontal towards the lower edge of the skirt.

This simple measure surprisingly means that during travel air is pressed through a narrow gap between the lower edge of the skirt and the water in the air cushion space, so that in the front part of said space the pressure relative to the rear part is increased slightly, and a layer of air which leads to a reduction in the friction resistance is produced between the skirt and the water. The tendency of the hovercraft to dip forward will be reduced and the filling of the air cushion space is improved. In addition, due to the greater pressure in the air cushion, with slight deformation the lower part of the skirt will be under tensile stress. The skirt wears less.

The above-mentioned angle α is preferably about 25°.

An easy, sturdy fixing of each segment is possible if the front wall of each segment is extended by a fixing piece at the top side.

There is a possibility of making not only the lower part of the front wall of the skirt segments, but also the entire front wall, slope back at an angle within the region from 20° - 35° relative to the horizontal. In general, it will be preferable for practical reasons for the above-mentioned lower part of the front wall to pass through a bend into a top part which slopes from the front backwards at an angle greater than 45°. The capacity of the air cushion is improved as a result.

The invention will now be explained in greater detail with reference to the figures, in which an example of an embodiment is shown.

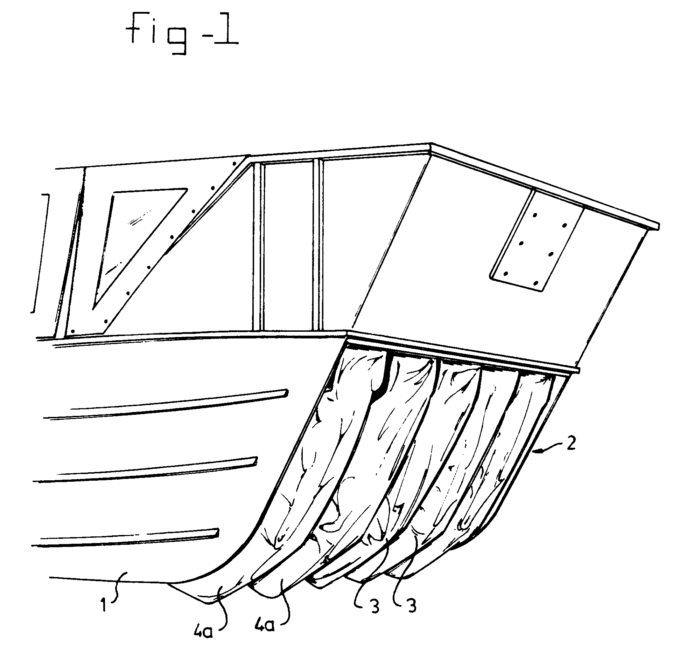

Figure 1 shows a perspective view of the front part of a hovercraft according to the invention.

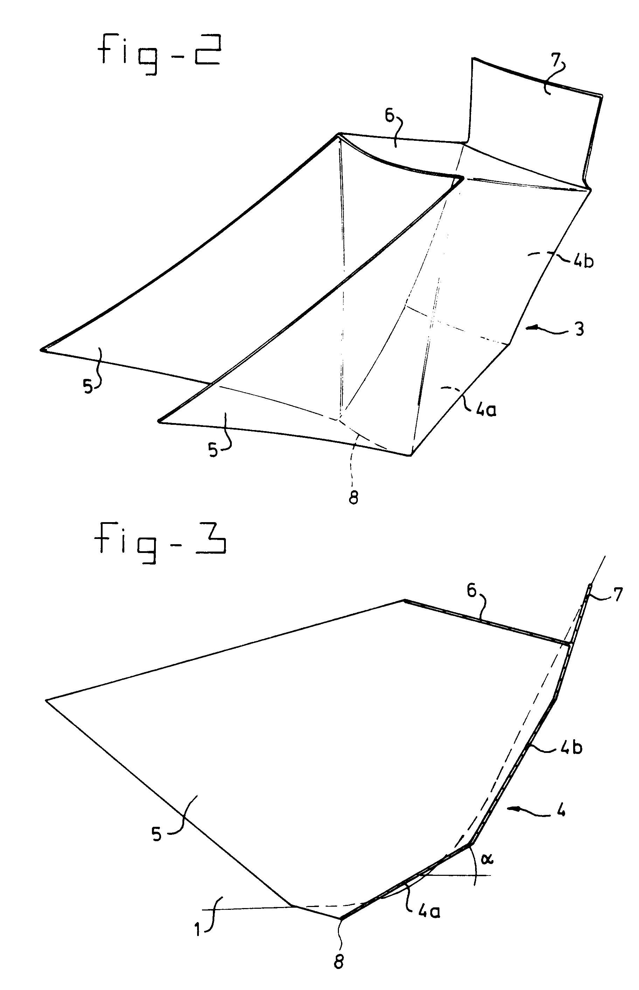

Figure 2 shows a perspective view of a trough-shaped skirt segment.

Figure 3 shows a longitudinal section of a skirt segment.

The air cushion space of the hovercraft shown, to be brought under pressure by known means, is defined at the sides by side aprons 1, and at the front side by a skirt 2 made of flexible material such as rubber or canvas. This skirt 2 is made up of a number of trough-shaped segments 3 placed next to each other.

Each segment comprises a front wall 4, two side walls 5, a top part 6, and a fixing piece 7 projecting at the top side of the front wall.

A part of each side wall 5 of a segment 3 is pressed during operation against a part of the side wall of an adjacent segment, or against a side apron 1, through the excess pressure in the air cushion space. The fixing pieces 7 of the segments are fixed to the hovercraft.

The lower part 4a of the front wall 4 of each skirt 3 slopes back at an angle α of max. 35° relative to the horizontal, in other words, from the top downwards in the backward direction, towards the lower edge 8 of the skirt 2.

The preferred value of α is about 25°. α must be greater than 20°.

Although during operation the pressure inside the air cushion space is higher than the atmospheric pressure, the speed of the hovercraft causes air to be pressed into the air cushion space through a narrow gap between the lower edge 8 of the skirt 2 and the surface of the water, as a result of which the pressure rises slightly locally. The pressure increase in the front part of the air cushion space ensures that the hovercraft has less tendency to dip in the water, which increases safety. The layer of air between the skirt 2 and the surface of the water leads to a reduction in the friction resistance. The air cushion filling is better and the speed greater. In addition, a significant advantage is that the skirt segments wear less. The segments are subjected to a tensile stress when there are slight deformations.

Of course, the entire front wall 4 of the segments can slope backwards at an angle α. In order to obtain a greater air cushion filling, it is better to make the lower part 4a pass through a bend into a top part 4b with less of an angle of inclination. A small part of the lower part 4a could have a different angle of inclination. Moreover, the lower part 4a can be extended beyond the lower edge 8 of skirt 2, either horizontally, or inclining, possibly in a curved pattern, upward according to e.g. the circumference of sidewall 5 as shown in fig. 3.

Various modifications are possible within the scope of the invention. It is quite possible for the skirt 2 to be made of only one trough-shaped segment. It is preferable to use several trough-shaped elements.

## Claims

1. Hovercraft which at the bottom side is provided with an air cushion space to be placed under pressure, which space at the front side is defined by a skirt made of flexible material such as rubber or canvas, which skirt is designed in the form of one or more trough-shaped segments, each trough-shaped segment having a lower part (4a) of the front wall (4) sloping from the front backwards, characterized in that at least the lower part (4a) of the front wall (4) of each trough-shaped segment (3) slopes from the front backwards at an angle α within the region from 20° - 35° with the horizontal towards the lower edge (8) of the skirt (2).

2. Hovercraft according to Claim 1, **characterized in that** said angle α is approximately 25°.

3. Hovercraft according to any of the preceding claims, **characte****rized in that** the front wall (4) of each segment (3) is extended at the top side by a fixing piece (7).

4. Hovercraft according to any of the preceding claims, **characte****rized in that** the above-mentioned lower part (4a) of the front wall passes via a bend into a top part (4b) which slopes from the front backwards at an angle greater than 45°.

## Patentansprüche

1. Luftkissenfahrzeug, das an der Bodenseite mit einem unter Druck setzbaren Luftkissenraum versehen ist, der Raum an der Vorderseite durch eine Schürze aus flexiblem Material, beispielsweise Gummi oder Segeltuch, bestimmt ist, die Schürze ein oder mehrere trogförmige Segmente aufweist, und jedes trogförmige Segment einen unteren Teil (4a) der Vorderwand (4) aufweist, der von vorne nach hinten schräg abfällt, dadurch gekennzeichnet, daß mindestens der untere Teil (4a) der Vorderwand (4) jedes trogförmigen Segments (3) von vorne nach hinten mit einem Winkel α in dem Bereich von 20° - 35° zur Horizontalen in Richtung der unteren Kante (8) der Schürze (2) schräg abfällt.

2. Luftkissennfahrzeug nach Anspruch 1, dadurch **gekennzeichnet,** daß der Winkel α ungefähr 25° beträgt.

3. Luftkissenfahrzeug nach einem der vorhergehenden Ansprüche, dadurch **gekennzeichnet,** daß die Vorderwand (4) jedes Segments (3) an der Oberseite durch ein Befestigungsteil (7) verlängert ist.

4. Luftkissenfahrzeug nach einem der vorhergehenden Ansprüche, dadurch **gekennzeichnet,** daß der oben erwähnte untere Teil (4a) der Vorderwand über eine Biegung in ein oberes Teil (4b) übergeht, das von vorne nach hinten mit einem Winkel größer als 45° schräg abfällt.

## Revendications

1. Véhicule à coussin d'air qui, sur son côté inférieur, est muni d'un espace pour coussin d'air destiné à être placé sous pression, l'espace qui sur le côté frontal est défini par une jupe réalisée en matériau flexible tel que du caoutchouc ou de la toile, la jupe qui est réalisée sous la forme d'un ou plusieurs segments en forme d'auge,et chaque segment en forme d'auge possédant une partie inférieure (4a) de la paroi frontale (4) en pente de l'avant vers l'arrière, caractérisé en ce que au moins la partie inférieure (4a) de la paroi frontale (4) de chaque segment (3) en forme d'auge est en pente de l'avant vers l'arrière à un angle α compris entre 20° et 35° par rapport à l'horizontale en direction du bord inférieur (8) de la jupe (2).

2. Véhicule à coussin d'air selon la revendication 1, caractérisé en ce que ledit angle α est d'approximativement 25°.

3. Véhicule à coussin d'air selon l'une quelconque des revendications précédentes, caractérisé en ce que la paroi frontale (4) de chaque segment (3) est prolongée sur le côté supérieur par une pièce de fixation (7).

4. Véhicule à coussin d'air selon l'une quelconque des revendications précédentes, caractérisé en ce que la partie inférieure mentionnée ci-dessus (4a) de la paroi frontale se raccorde par un coude à une partie supérieure (4b) en pente de l'avant vers l'arrière à un angle supérieur à 45°.
